# EUROPEAN PATENT APPLICATION

(11) **EP 2 059 087 A1**
(43) Date of publication of application: **13.05.2009**
(21) Application number: 08105276.3
(22) Date of filing: 09.09.2008
(51) Int. Cl.: H04W 88/12, H04W 92/14

(54) **Method for establishing circuit switched calls in a mobile radio network and mobile radio network**

(30) Priority: 06.11.2007 EP 07425695
(71) Applicant: Nokia Siemens Networks S.p.A., 20060 Cassina de'Pecchi (MI) (IT)
(72) Inventor: Parolari, Sergio, 20133 Milano (IT)
(74) Representative: Bruglachner, Thomas E.

(57) **Abstract**

A method for establishing a circuit switched call between a first mobile station (MS1) and a second mobile station (MS2) in a mobile radio network (MRN) having a core network (CN) and radio access network (RA) with a base station subsystem (BSS), comprises the steps of: at the core network (CN), monitoring whether a circuit switched call request from the first mobile station is to be terminated at a second mobile station (MS2) being communicatively coupled to the same base station subsystem (BSS); and establishing a user plane data flow between the first mobile station and the second mobile station exclusively through infrastructure elements (BSC, BTSa, BTSb) of the base station subsystem (BSS) if the first and the second mobile station (MS1, MS2) are communicatively coupled to the same base station subsystem (BSS).

## Description

This disclosure relates to a method for establishing a circuit switched call between mobile stations in a mobile radio network and to a corresponding mobile radio network. More in particular, the invention aims at enabling local switching of circuit switched (CS) calls in mobile radio networks, in particular GSM Edge Radio Network (GERAN) networks.

A GERAN network includes an access network, made of several Base Station Subsystems (BSS), and a core network, made of - in the CS domain - several Mobile Switching Centers (MSC). A BSS includes a Base Station Controller (BSC) connected to several Base Transceiver Stations (BTS). A MSC can optionally be split in a MSC Server (MSC-S), dealing with the Control Plane procedures, and a Media Gateway (MGW), dealing with User Plane data. One BSC is typically connected to a MSC via the A interface, but possibly also to more than one, e.g. for redundancy reasons. One MSC is typically connected to more than one BSC. The A interface is the interface that connects the BSS and the MSC.

In a mobile radio network like GERAN every CS call needs to go through a MSC, including both the signaling and the user plane data flow. This applies also in case the user originating the call and the user terminating or receiving the call are connected to BTSs controlled by the same BSC, i.e. also for local calls inside one BSS. This is needed because when a mobile station originates the call, the BSC has no information about the identity of the called party, and whether it is located in the same BSS area or not. The call is always controlled by the MSC that also establishes a circuit (identified by a Circuit Identity Code - CIC) towards the BSS where the call is originated and another circuit (with another CIC) towards the BSS where the call is terminated. In case the calling and the called parties belong to the same BSS, two circuits are established between the BSS and the MSC.

The term "local switching" refers to the possibility to exclude the MSC from the user plane data flow (or exclude the MGW, when the MSC functionalities are split into a MSC-S and a MGW) whenever a CS call involves two mobile stations served by the same BSS, and rely on the BSC for switching the CS call through to the target cell. One of the important benefits of this is that establishing two circuits on the user plane interface between the BSC and the MSC (or the between the BSC and the MGW) could be avoided and a lot of bandwidth could be saved.

As already described, local switching is currently not possible because, even after the call is established by the MSC, because the BSC has no information to correlate "who is talking to whom". And even if the BSC had the information, the circuits towards the MSC (or MGW) would already be established and could not be released.

A feasibility study is currently ongoing in the 3GPP TSG GERAN committee to define an IP-based A interface in the user plane (see G2-070305, "AoIP Motivation, Architecture, Functional Impacts", GERAN WG2#35bis and G2-070359, "Draft Technical Report: A-interface over IP", GERAN WG2#35bis).

The main ideas of such proposals are to replace the user plane circuits between the MSC (or MGW) and the BSC with IP connections (i.e. with a pair of IP addresses and UDP ports) and consequently replace the CICs with identifiers of the IP connection (e.g. with "A over IP Call Instance Codes") or, equivalently, with identifiers of the signalling connection associated to it (e.g. with "A over IP Signalling Connection Identifiers").

The standardization of the A interface over IP (in the User Plane) has many goals, for instance an easier network configuration, and the possibility to use compressed speech codecs between the BSS and the MSC, so that the need of bandwidth on the A interface is reduced. In 3GPP TS 48.008, "Mobile Switching Centre - Base Station System (MSC-BSS) interface" general aspects of the communication between the BSS and MSC are disclosed.

However, for local CS calls (i.e. calls involving two mobile stations controlled by the same BSC) it is still needed to consume some bandwidth on the A interface. Only with a local switching approach it is possible to bring the bandwidth needed on the A interface down to zero.

It is therefore an object of the present invention to obtain further bandwidth savings and delay reductions for calls in mobile radio networks.

Therefore a method for establishing a circuit switched call between a first mobile station and a second mobile station in a mobile radio network is disclosed. The mobile radio network comprises a core network and a radio access network with at least one base station subsystem. The method comprises: At the core network, monitoring whether a circuit switched call request from the first mobile station is to be terminated at a second mobile station being communicatively coupled to the same base station subsystem. And, establishing a user plane data flow between the first mobile station and the second mobile station exclusively through infrastructure elements of the base station subsystem, if the first and the second mobile station are communicatively coupled to the same base station subsystem.

Consequently, local switching is enabled because no bandwidth has to be provided between the base station subsystem and the mobile switching center. Further, any delay for the calls is reduced because the transmission path is shortened conventionally including a data flow between the base station controller and elements of the mobile switching center.

The method may further comprise: transmitting an information element from the core network to the radio access network if the first and the second mobile station are communicatively coupled to the same base station subsystem. The information element indicates a local circuit switched call between the first and the second mobile station.

The information element, for example, may contain "other party information" if local calls are expected.

Preferably, the information element is transmitted from a mobile switching center server to the base station controller through a control plane data flow. This allows the base station controller to decide whether the local circuit switched call is established, wherein user plane data is transmitted directly between the first and the second mobile station through the base station controller or through a base transceiver station. The latter is feasible if both mobile stations are communicatively coupled to the same base transceiver station.

According to an aspect of the method for establishing a circuit switched call, user plane data flow between the base station subsystem and the mobile switching center server and between a media gateway in the mobile switching center and base station subsystem is blocked. This means, for example, that established IP connections between a first and a second mobile station and the mobile switching centre may remain however, no data is exchanged through those connections. Rather, data between two mobile stations is exchanged via a base station subsystem.

In the method for establishing a circuit switched core, the information element can be:
- an identifier for a connection between the second mobile station and the mobile switching center,
- an identifier of a signaling connection associated to a user plane connection of the second mobile station,
- an IP address and the UDP port at the radio access network of the IP connection of the second mobile station,
- an "A over IP Call Instance Code" of an IP connection of the second mobile station,
- an "A over IP signaling connection identifier" of an IP connection of the second mobile station, or
- an IP connection and a UDP port at the BSC of the IP connection of the second mobile station.

The optional information element containing "other party information" to messages that establish a new IP connection between the MSC or the media gateway and the BSC via the radio access network allows to identify and correlate the two connections and merge them. Then, a direct communication is provided, and one excludes the core network from any user plane data flow.

In the method therefore monitoring may also comprise comparing IP connection identifiers of a first IP connection between the first mobile station and the mobile switching center and a second IP connection between the second mobile station and the mobile switching center.

Also, establishing a user plane data flow may comprise merging a first IP connection between the first mobile station and the mobile switching center with a second IP connection between the second mobile station and the mobile switching center at a base station controller or base transceiver station.

Preferably, the mobile radio network is implemented as a GSM/EDGE radio access network (GERAN).

This disclosure also presents a mobile radio network comprising a core network and a radio access network with a base station subsystem wherein the mobile radio network is implemented to perform a method for establishing a circuit switched call as mentioned above.

Further, a computer program product is claimed which is implemented to execute a method for establishing a circuit switched call between other station in a mobile radio network comprising at least a mobile switching center server, a media gateway, a base station controller and a plurality of base transceiver stations.

Further, a recording medium having stored said computer program product can be provided. Hence, the computer program product can be realized on a recording medium which comprises any known type of data storage media including a magnetic medium, optical medium, hard discs, USB memory sticks and the like. A computer program product, for example, can also be implemented as a downloadable file provided by a server in the internet.

In the following certain aspects of the invention are further illustrated with reference to the accompanying drawings in which
Fig. 1 shows a block diagram illustrating an example of a local call with switching in the MSC (MGW); and
Fig. 2 shows a block diagram illustrating an example of a local call where the local switching is in the BSS.

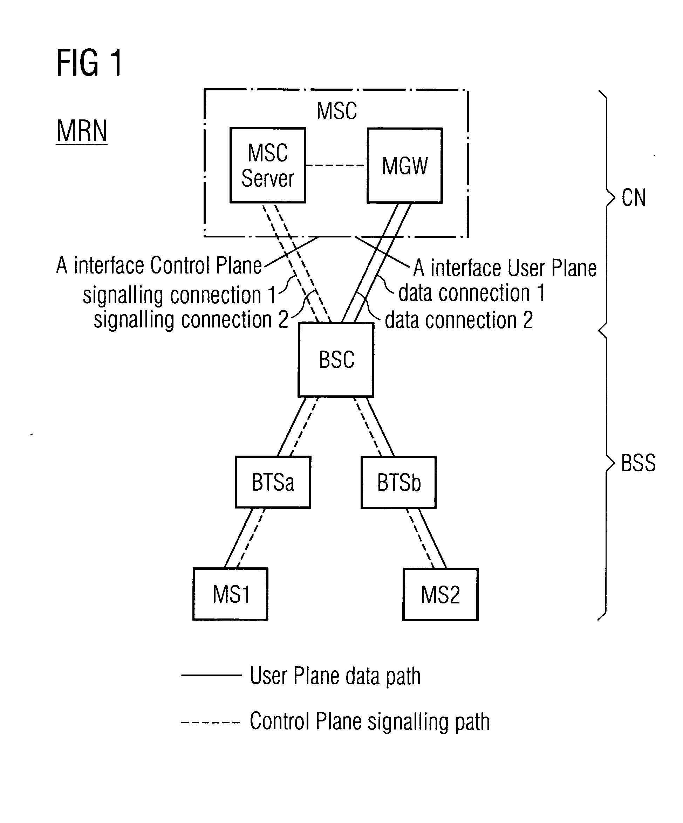

In the figures like and functionally like elements have been assigned the same reference signs.Fig. 1 shows a part of a mobile radio network MRN, for example implemented as part of a UMTS network, comprising a core network and the base station subsystem. The base station subsystem BSS is usually comprised in the radio access network (RAN). It can also comprise the UMTS terrestrial radio access network (UTRAN). The GMS/EDGE radio access network, considered here as BSS, is also known as GERAN.

The core network CN comprises the mobile switching center MSC having for example a MSC server and a media gateway MGW. The base station subsystem BSS comprises a base station controller BSC which is communicatively coupled to usually a plurality of base transceiver station BTSa, BTSb. The base transceiver stations BTSa, BTSb provide for the actual radio coupling to user equipment, for example mobile phones, PDAs, appropriately equipped laptop computers and so on. Fig. 1 shows a first mobile station MS1 and a second mobile station MS2. Both, MS1 and MS2, are coupled to a base transceiver station BTSa, BTSb, respectively. The base transceiver stations BTSa, BTSb are coupled to a base station controller BSC.

In the figures a control plane signal path is indicated by dash lines, and the user plane data path is indicated by solid lines. In UMTS systems even if circuit switched calls are initiated between user equipment, the actual data transmission is arranged via IP technology and therefore packet oriented.

Conventionally, if a call from, for example, a mobile phone MS1 to a mobile phone MS2 has to be established, a control plane signal path between MS1 over BTSa and BSC to the mobile switching center server MSC server is established. Between the base station controller BSC and the core network the 3GPP standard provides an "A interface" for the control plane and one for the user plane. In principle, both cell phones MS1, MS2 have an IP connection in the control plane signal path to the core network.

Conventionally, if both parties or cell phone MS1 and MS2 establish a call, this is provided through the media gate way MGW. The media gateway MGW establishes an IP data connection 1 via the BSC and the BTSa to a first mobile station or phone MS1. Additionally, the media gateway MGW establishes a second IP connection (indicated as "data connection 2") via a connection to the BSC and the BTSb to the second cell phone or mobile station MS2. If it can be recognized, that both parties, i.e. a first and a second mobile station MS1 and MS2, are communicatively coupled to the same base station controller BSC or belong to the same base station subsystem, a direct user plane data path can be established without creating bandwidth between the base station controller BSC and the core network CN and in particular to the media gateway MGW.

Therefore, an optional information element is provided, which contains "other party information" which is used when a new IP connection between the MSC or MGW and the BSC is established. If the radio access network, in particular the BSC or the BTS, receive this additional information element with respect to two IP connections, i.e. first, the connection between MS1 and MGW, and, second, the connection between MS2 and MGW, both can be merged together into one user plane data flow circumventing the core network CN. As a result, local circuit switched calls are generated.

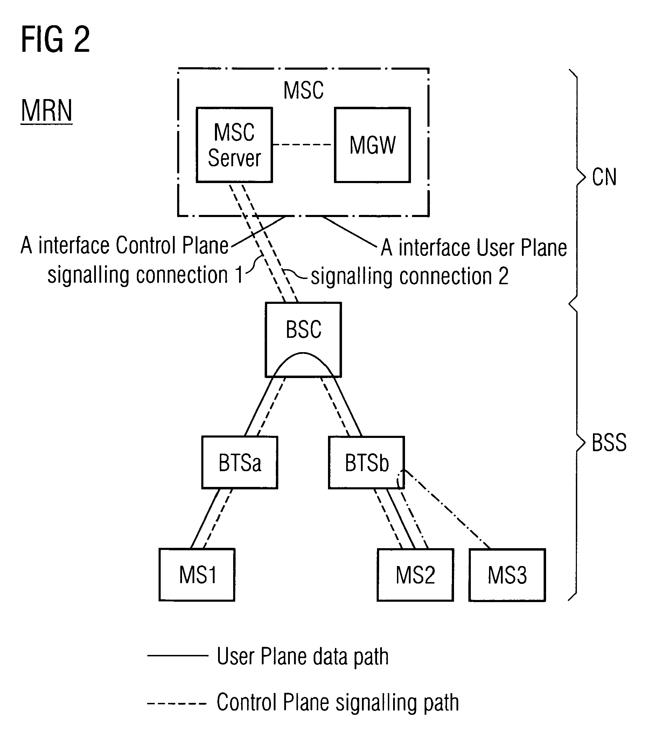

Consequently, as shown in fig. 2, a user plane data path (solid line) runs directly between the first mobile station or the cell phone MS1 through the associated base transceiver station BTSa, the base station controller BSC and the base transceiver station BTSb associated to the second cell phone or mobile station MS2. Hence, there is no data to be transmitted over or to the core network CN.

The information element can be realized by an optional field in messages that are anyway used for a call setup. For example an message ASSIGNMENT REQUEST for a call setup can be provided with a data field in which the so called "other party information" is inserted. The optional field can also be provided in the HANDOVER REQUEST messages. This is useful if inter-BSS handovers are to be performed. This means, if a mobile station leaves the coverage area of the actual BTS and logs on to another BTS which is associated to a different BSC the local switching exclusively in the BSS should be interrupted and a regular switching to the MSC is performed.

The "other party information" in terms of an information element can be included by the MSC-server in any message that is needed to establish a new IP-connection with the BSS under consideration. Favorably, the additional information element is only added to the messages if, at the MSC in the core network CN, it is detected that the second IP-connection is to be terminated at a mobile station belonging to the same BSS.

This is for example the case in figure 2 where the mobile station MS1 and the mobile station MS2 are coupled through BTSa and BTSb to the same BSC. Hence, the data connections, data connection 1, data connection 2, shown in figure 1 are cut off and a merged user plane data path is established directly through the BSC. Still the signaling connections, signaling connection 1 and signaling connection 2 in the control plane signaling path (dashed lines) can remain active through the A-interface with the MSC-server. In a variant of the proposed method it is also possible that the MSC refrains from including the information element allowing the local switched call if, for example, for lawful interception the CS call needs to go through the core network CN for monitoring.

As an example, the information element allowing the BSS to perform actual local switching the A over IP call instance codes can be used. Alternatively, the A over IP signaling connection identifiers of the IP-connection of the second mobile station MS2, the IP address in UDP port at the MSC or MGW of the IP connection of the second mobile station MS2 or the IP address a UDP port at the BSC of the IP-connection of the second mobile station MS2 can be employed as the "other party". Once, the messages containing the additional information element are acknowledged by the BSS the two identified IP connections can be correlated and put together. Hence, local switching is achieved wherein any MSC or MGW is excluded from the user plane data flow. As mentioned above, the two IP connections to the MSC do not need to be released. Rather, the MSC or MGW does not except to receive any data through those connections. Once, one of the involved IP connections is released by the MSC the user plane data flow from the respective mobile station to the MSC or MGW is restarted by the BSC. This may occur when an outgoing inter-BSS handover is performed for a mobile station moving out of the BSS coverage area.

In an alternative embodiment of the method and corresponding radio network the user plane flow regarding two mobile stations, for example MS2 and MS3 in figure 2, can be merged already at BTS level. For example, both cell phones MS2 and MS3 are communicatively coupled to the same BTSb. Local switching can be achieved on a BTS level. Hence, the actual data transfer between those two parties MS2 and MS3, can even be excluded from the BSC. In figure 2 this is indicated by the dash-dotted line corresponding to a user plane data path between MS2 and MS3. Again, no bandwidth is necessary to be provided by the core network CN in this situation.

As a result of the method and system for establishing circuit switched call between mobile stations bandwidth savings and delay reductions in the respective calls are achieved. In particular, in a UMTS architecture bandwidth on the A-interface is less consumed with respect to conventional switching processes.

## Claims

1. A method for establishing a circuit switched call between a first mobile station (MS1) and a second mobile station (MS2) in a mobile radio network (MRN) having a core network (CN) and radio access network (RAN) with a base station subsystem (BSS), comprising:
at the core network (CN), monitoring whether a circuit switched call request from the first mobile station is to be terminated at a second mobile station (MS2) being communicatively coupled to the same base station subsystem (BSS); and establishing a user plane data flow between the first mobile station and the second mobile station exclusively through infrastructure elements (BSC, BTSa, BTSb) of the base station subsystem (BSS) if the first and the second mobile station (MS1, MS2) are communicatively coupled to the same base station subsystem (BSS).

2. The method of claim 1, further comprising:
transmitting an information element from the core network (CN) to the radio access network (RAN) if the first and the second mobile station (MS1, MS2) are communicatively coupled to the same base station subsystem (BSS), said information element indicating a local circuit switched call between the first and the second mobile station (MS1, MS2).

3. The method of claim 2, wherein said information element is transmitted from a mobile switching center server (MSC-S) to the base station controller (BSC) through a control plane data flow.

4. The method of claim 3, further comprising:
blocking user plane data flow between the base station subsystem (BSS) and the mobile switching center server
(MSC-S) and a media gateway (MGW) in the mobile switching center (MSC).

5. The method of any one of claims 2 - 4, wherein said information element is one of the group of:
an identifier of a connection between the second mobile station (MS2) and the mobile switching center (MSC),
an identifier of a signaling connection associated to a user plane connection of the second mobile station (MS2),
an IP address and a UDP port at the core network of an IP connection of the second mobile station (MS2),
an IP address and a UDP port at the radio access network (RA) of the IP connection of the second mobile station (MS2),
an A over IP Call Instance Code of an IP connection of the second mobile station (MS2),
an A over IP Signalling Connection Identifier of an IP connection of the second mobile station (MS2), or
an IP address and UDP port at the BSC of the IP connection of the second mobile station (MS2).

6. The method of any one of claims 1 - 5, wherein a connection between the core network (CN) and the radio access network (RAN) are IP connections.

7. The method of claim 6, wherein monitoring comprises:
comparing IP connection identifiers of an IP connection between the first mobile station (MS1) and the mobile switching center (MSC) and a second IP connection between the second mobile station (MS2) and the mobile switching center (MSC).

8. The method of claim 6 or 7, wherein establishing a user plane data flow comprises:
merging a first IP connection between the first mobile station (MS1) and the mobile switching center (MSC) with a second IP connection between the second mobile station (MS2) and the mobile switching center (MSC) at a base station controller (BSC) or a base transceiver station (BTS).

9. The method of any one of claims 1 - 8, wherein said infrastructure elements (BSC, BTSa, BTSb) of the base station subsystem (BSS) are a base station controller (BSC) or a base transceiver station (BTS).

10. The method of any one of claims 1 - 9, wherein said mobile radio network is a GSM Edge Radio Access network (GERAN).

11. A mobile radio network (MRN) comprising a core network (CN) and a radio access network (RAN) with a base station subsystem (BSS), said mobile radio network being implemented to perform a method of any one of claims 1 - 10.

12. The mobile radio network (MRN) of claim 11, wherein the base station subsystem (BSS) comprises a base station controller (BSC) and a plurality of base transceiver stations (BTS).

13. The mobile radio network (MRN) of claim 11 or 12, wherein the mobile switching center (MSC) comprises a mobile switching center server (MSC-S) and a media gateway (MGW).

14. The mobile radio network (MRN) of any one of claims 11 - 12, wherein said mobile radio network is a GSM Edge Radio Access network (GERAN).

15. Computer program product being implemented to execute a method of any one of claims 1 - 10 on a programmable a mobile switching center server (MSC-S), a media gateway (MGW), a base station controller (BSC) and a plurality of base transceiver stations (BTS) of a mobile radio network (MRN).
